Europäisches Patentamt

European Patent Office

Office européen des brevets

(19)

(11) Publication number: **0 186 867**
A2

(12) # EUROPEAN PATENT APPLICATION

(21) Application number: 85116268.5

(22) Date of filing: 19.12.85

(51) Int. Cl.⁴: **B 65 D 81/34**

(30) Priority: 19.12.84 DE 3446403

(43) Date of publication of application: 09.07.86
Bulletin 86/28

(84) Designated Contracting States: **AT BE CH DE FR GB IT
LI LU NL SE**

(71) Applicant: **HAG GF AKTIENGESELLSCHAFT,
Hagstrasse, D-2800 Bremen 1 (DE)**

(72) Inventor: **Büker, Dieter, Hindenburgstrasse 29B,
D-2870 Delmenhorst (DE)**

(74) Representative: **Abitz, Walter, Dr.-Ing. et al, Abitz, Morf,
Gritschneder, Freiherr von Wittgenstein
Postfach 86 01 09, D-8000 München 86 (DE)**

(54) **Coffee or tea filter pouch and process of producing it.**

(57) A coffee or tea filter pouch for the production of filtered coffee, or resp., tea includes two layers of a water-permeable filter material, which are joined at the edges to form a package containing a coffee powder or resp., tea leaves. The filter material is unilaterally heatsealable, and the two layers (2, 3) of the filter material are joined at the edges (4, 5, 6, 7) through a heatsealing seam. The heatsealing seam along the upper edge (7) is adapted to be pulled open or torn open, or else the two layers (2, 3) are joined together at the upper edge (7) through a folded layer of said unilaterally heatsealable filter material, said folded layer being inserted, with the folded edge pointing downwardly and with the heatsealable side being directed outwardly, into the upper region of the filter pouch (1), and the gusset (insert) (10) is heatsealed to the two layers (2, 3) of the filter material at the upper edge (7) and in the region of the side edges (4, 5).

The filter pouch (1) may be produced by a continuous or an intermittent process from two webs or from a single web of said filter material.

## COFFEE OR TEA FILTER POUCH AND
## PROCESS OF PRODUCING IT

### Field of the Invention

The invention relates to a conical coffee or tea filter pouch to produce filtered coffee or, resp., tea by means of brewing coffee powder or, resp. tea leaves with boiling water. The filter pouch has two layers of a water-permeable filter material, which are joined at the edges to form a package receiving the coffee powder or, resp., the tea leaves. The circular-segment-configured shape of the filter pouch makes it particularly suited for insertion into the commercially customary conical filter holding cones on coffee machines or coffee pots. Furthermore, it is suited in particular for producing amounts of coffee for several cups. The invention relates, furthermore, to a process for producing the coffee-filter pouch in a continuous production operation.

### Description of the Prior Art

Coffee-filtering pouches of two layers of paper or other water-permeable filter material are known from the DE-A1-22 18 081 and 27 38 969. The layers are joined at their edges through mechanical pressure, through adhesive bonding or through welding. The other edges are folded. The coffee pouch according to DE-A1 27 38 969 is used similarly as a tea bag to produce individual portions of coffee and is, for that purpose, hung into the cup. A drawback that is involved here is that the water that is poured on cools rapidly in the cup and in that way not all of the aromatic substances are extracted from the coffee powder, so that this type of production of individual portions of coffee is not satisfactory from the standpoint of taste, and the cups are half empty after the filter pouch is removed, as the coffee powder absorbs a large quantity of water. The coffee-filter pouches according to DE-A1 22 18 081 are: similar to filter bags; used to produce filter coffee; they are, however, difficult to produce, as they are made of internested bags. Though said printed publication also describes a process of producing the filter pouch from an endless paper tube, said filter pouch then has, however, a rectangular shape that is unsuited for insertion into the commercial conical filter holding cones of coffee machines and coffee pots. Moreover, there results a separation of the swelling chamber and non-uniform accumulation of the coffee powder, with a substantial part of the water poured on, thus flowing through the filter without adequately penetrating through the coffee powder.

A coffee-filter pouch is known from US-A-3,971,305, which consists of a truncated-cone-shaped filter bag, in which the coffee powder is enclosed. This filter bag is secured in a truncated-cone-shaped holder consisting of rigid material for placement onto a cup. The production of that type of filtering bags is such as to involve extraordinary effort and is in no proportion to the price of the coffee powder if an amount of coffee is to be prepared from one or a few cups.

- 3 -

## Summary of the Invention

The invention is based on the object to provide a coffee-filter pouch, which makes it possible to produce a good-tasting filter coffee or tea beverage for a plurality of cups, and the production costs of which are low, and to provide as well a corresponding process.

Said object is accomplished in that the filter material is heat-sealable only on one side, and in that the sealing seams to extend at least over the lateral edges of the filter pouch.

It is made possible in that way to produce the filter pouch by a continuous process, i.e., to shape it, seal it, fill it, and close and die-cut it. Hence, a process, in which all heat-sealing seams and die-cuttings can be produced in a single or in two integrated steps, but in a single pass (operating cycle). In the process according to the invention, for example two webs are in that connection brought together in a gap of a pair of heatsealing cylinders, a metered volume of coffee powder is simultaneously added in the roller gap, and the thus formed filter pouch is then cut or die-cut out of the webs. One of the difficulties encountered in the production of filled filter pouches is that the layers of the filter material no longer come lie, on account for the filling, flat one on the other but, rather, are more or less arched. Disturbing folds can form when that kind of webs is heatsealed. According to the invention, therefore, a part of the sealing seams is produced already before, or at the latest during, the addition of the coffee powder. It is for that same reason and for utmost reliability that a part of the die-cuttings also is produced prior to addition of the coffee powder, so that it is ensured that the finished filter pouch has uniformly wide sealing edges.

- 4 -

While pouches for foods and other articles of use customarily have only heatsealing seams that are horizontal and vertical, at right angles to one another, form- and contour-sealing may take place in the process according to the invention. It is made possible in that way that the filter pouch of the invention has heatsealing seams, which do not extend at right angles to one another, in which way, for example, the conical shape of the filter pouch is attained. Another peculiar aspect of the process of the invention resides in that the individual heatsealing seams are formed in one operating step. In particular, the production of the upper heatsealing seam is to take place separately in order to make the upper edge of the filter pouch capable of being pulled open, which requires lower temperatures and lower pressures during heatsealing.

To enable the filter pouch to be used in the same way as a conventional coffee filter, with the difference being that the coffee powder is already pre-packaged in the filter pouch, the filter pouch is preferably designed such that the two layers of the filter paper can be separated along the upper edge, i.e., the filter pouch can be opened at that location. To that end, the heatsealing seam is designed weaker along the upper edge, so that, though it is tight and secure enough to prevent coffee powder from flowing out, it nevertheless remains capable of being pulled or torn open. There furthermore is expediently provided along the upper edge a projecting grip tab which facilitates pulling or tearing the filter pouch open. Another possibility is to join the two layers of the filter material along the upper edge not to one another, but rather to a folded gusset (insert) of the filter material, which, starting from the uppper edge, also joins a

0186867

portion of the lateral edges to the two layers of the filter material. In that connection, the two layers may along this upper part of the lateral edges be heatsealed only with the gusset. The gusset preferably is designed to be a little more narrow than the two layers of filter material, so that the two layers are heatsealed along this upper part of the lateral edges with one another as well as also with the gusset. The two layers are heatsealed together along the outer region of the lateral edges, while they are heatsealed on the following, inner region of the lateral edges not with one another but, rather, with the outwardly facing areas of the gusset. The heatsealing seam in this region may additionally, however, be designed to be somewhat wider. When the filter pouch is folded open, the gusset then spans the upper opening of the filter pouch, so that even in the event of maladroit manipulation there does not exist any danger that coffee powder drops out of the filter pouch. Preferably the insert should have sufficient depth that it is spanned in a plane low enough to leave sufficient room for holding all the water (required for several cups) poured in at once, as is commonly done when preparing coffee in the traditional way.

That type of coffee-filtering pouches is preferably produced in a manner such that a single filter material web is longitudinally folded in W-shaped manner through wedge-shaped forming members and then the sealing seams are produced in a manner such that the filter pouch points upwards with the bottom edge. In that regard, at first the sealing seams along the downwardly pointing upper edge and the portion of the lateral edges which follows are produced. There then is inserted through the bottom

0186867

of the latter filter pouch a predetermined amount of the coffee powder, and subsequently thereto the bottom edge and the remaining portion of the lateral edges that follows are heatsealed. The filter pouch then is ready and may be cut or die-cut out of the web.

Even though the filter material may be heatsealed only on one side, it is possible to heatseal together all four layers in the botton region of the W-shaped fold, with the two inner layers then constituting the insert. To that end, rhombic cut-outs are provided along the center line of the filter material web, the one diagonal of which cut-outs coincides with the center line of the web. The spacing between the tips of the rhombic cut-outs corresponds to the bottom width of the insert.

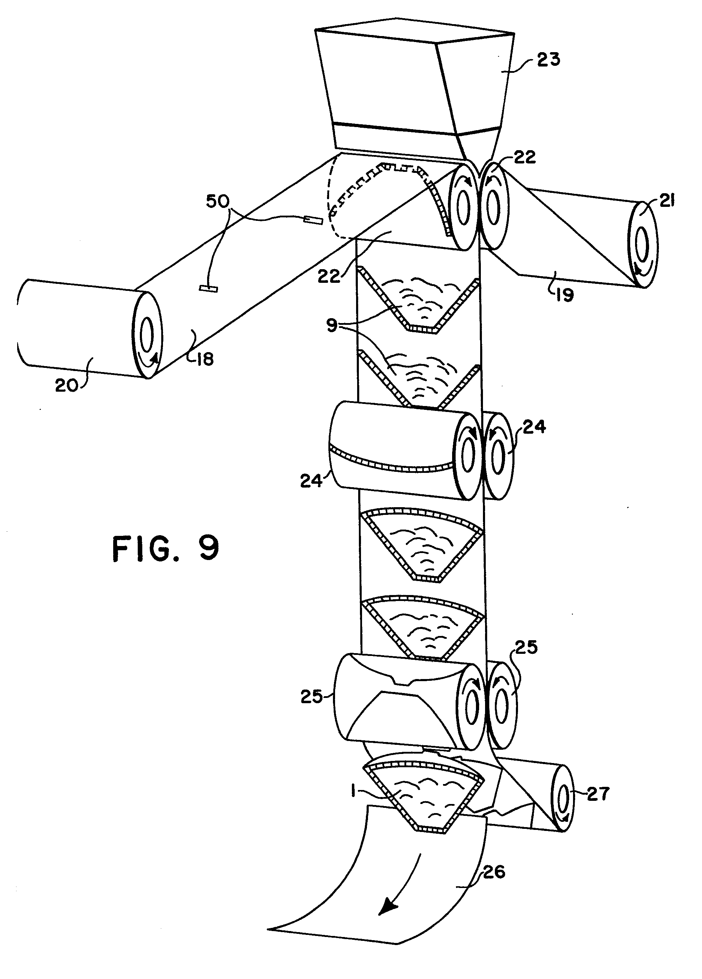

To enable the filter pouch to be positioned within conventional truncated-cone-shaped coffee filter holders, the lateral edges enclose an angle of between 60° and 90°, and the filter pouch on the whole has the configuration of about a circular sector with the tip cut off. Other pouch configurations which likewise are in accordance with the invention are depicted in Figures 5-8.

Brief Description of the Drawings.

Exemplary embodiments of the invention will be explained below with the aid of the drawing, which shows in:

Fig. 1: a coffee-filter pouch with a heatsealing seam adapted to be pulled open along the upper edge;

Fig. 2: a coffee-filter pouch with gusset (insert);

Fig. 3: the coffee-filter pouch of Fig. 2 in a section taken along lines 3-3 in closed condition;

Fig. 4: the coffee-filter pouch according to Fig. 2 in a section along 3-3 in opened condition;

Fig. 5 to 8: further geometric shapes of the coffee-filter pouch;

Fig. 9 to 12: simplified, schematic representations of the conduction of the process of producing a coffee-filter pouch as according to Fig. 1 and

Fig. 13: a simplified, schematic representation of the conduction of the process for producing a coffee-filter pouch as according to Fig. 2.


Detailed Description of the Invention.

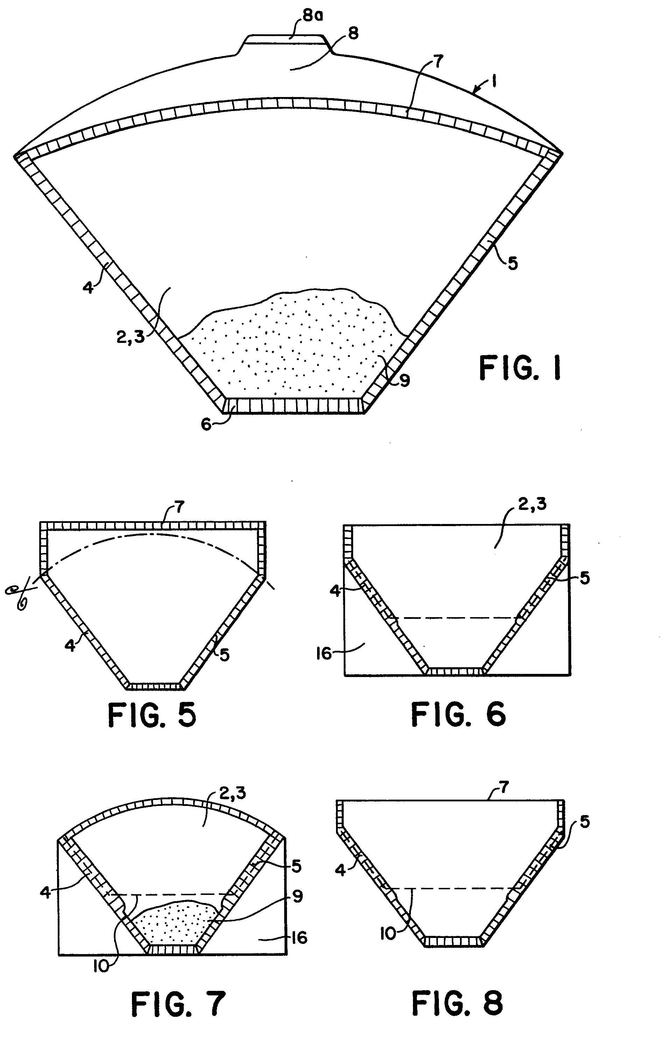

Fig. 1 shows a front view of a coffee-filter pouch 1, which includes two layers 2, 3 of filter material, which are joined together along the lateral edges 4, 5, the bottom edge 6 and the top edge 7 through heatsealing seams. The heatsealing seams are depicted in hatched lines in the drawing. The heatsealing seam along the upper edge 7 is produced under lower temperature and/or lower pressure, so that it is adapted to be pulled open or torn open. To facilitate pulling or tearing open, tabs 8 of each layer 2, 3 project beyond the upper edge 7. The layers 2, 3 may be grasped by said tabs and be pulled apart. Preferably these tabs may also project to different height with, for example, a 2-3 millimeter distance, thus forming a grip lip 8a, which still further facilitates opening. The coffee-filter pouch 1 then in function corresponds to a conventional filter bag provided with coffee powder and is manipulated in the same way, i.e., is inserted into a truncated-cone-shaped filter bag holder, into which boiling water is poured for brewing the coffee. This is done either by hand, when the holder is placed onto coffee pots, or automatically in all types of embodiment of commercial filter-coffee machines.

The coffee-filter pouch serves as an envelopment for a precisely measured, unchanging quantity of coffee powder 9 or tea leaves, so that a beverage of uniform quality can be prepared. In that regard, coffee or tea powder quantities and filter pouch sizes for 2, 4 and 6 to 10 cup portions are being preferably produced.

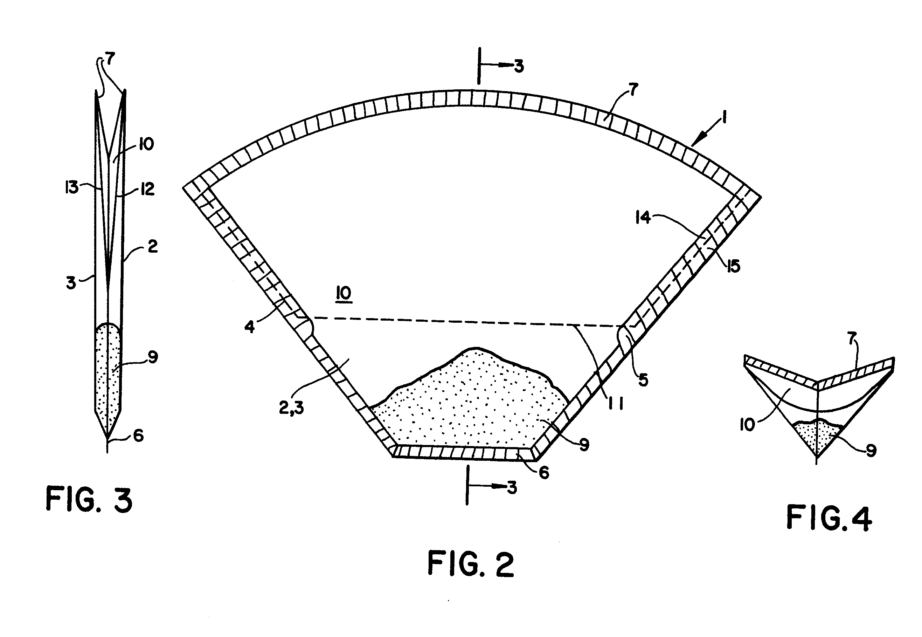

Fig. 2 to 4 show a coffee-filter pouch 1 with an insert 10. The two layers 2, 3 of the filter paper are connected together through a heatsealing seam along the lateral edges 4, 5 and the bottom edge 6.

The insert 10, which consists of filter material permeable to boiling water and folded along line 11, is located in the upper region of the coffee-filter pouch 1. The insert 10 is positioned in the manner of a gusset (gore) in the upper region of the coffee-filter pouch 1 and is to make it possible to fold open the coffee-filter pouch 1, without there being any need for pulling open a heatsealing seam.

The folded insert 10 consists of two sheets 12, 13, which are joined along line 11. Each of the sheets 12, 13 is connected along the upper edge 7 with one of the layers 2, 3 through a heatsealing seam. It is also connected with said layer 2 or, resp., 3 through a heatsealing seam until down to line 11 along the lateral edges 4, 5. In that connection, the insert 10 is a few millimeters more narrow in transverse direction than said layers 2, 3, so that said heatsealing seam extends between said sheets 12, 13 and said layers 2, 3 only over about half the width of said heatsealing seam, i.e.,

the inner region 14.  The layers 2, 3 are connected together longitudinally of the outer region 15. Therefore, there exists along the upper part of the lateral edges 4, 5 a connection of the two sheets 12, 13 of the insert with said two layers 2, 3 of said filter material.  The insert is either produced of the same filter material as layers 2, 3 from a single web of material - with its water-permeability optionally still enhanced through additional minutest needle perforation - , or it is formed of a second web of material of the same or of different filtering material.

In use, the coffee-filter pouch 1 according to Figures 2 to 4 is placed into a conventional filter bag holder, with the two layers 2, 3 generally separating of their own along the upper edges 7, or else they are pushed apart by hand.  The coffee powder 9 enclosed within the coffee-filter pouch is then in customary manner brewed with boiling water, with the water that is poured-on penetrating at first through the filter material of the insert before wetting and extracting the coffee powder.

The Figures 5 to 8 show further forms of the coffee-filter pouch.  In the embodiment according to Figure 5, the upper edge 7 is not designed to have the shape of a circular line but, rather, to be straight with end regions extending at right angles thereto which merge into the lateral edges 4, 5.  In that respect, the heatsealing seam of the upper edge 7 may be of like strength as the remaining sealing seams, and in use the coffee-filter pouch is cut open at the edge 7.  In coffee machines having a filter-cover to retain aroma, cutting open occurs according to the sector line shown by a dash-and-dot line and connecting the two upper ends of the lateral edges 4, 5, in which way it is avoided that the filter pouch projects beyond the edge of the filter holder.

In the embodiment as according to Figures 6 and 7, the projecting regions 16 have been left to stand. Production of the coffee-filter pouch is simplified in that way. On insertion of the coffee-filter pouch according to Fig. 6 and 7 into a filter bag holder, the projecting regions 16 are folded over the lateral edges 4, 5, so that they cover a portion of the layers 2, 3. The flow resistance on passage of the brewing water through the filter material then is increased in these portions, so that premature passage of the brewing water through the upper regions of layers 2, 3 is somewhat hindered, and the water for brewing is passed through the full layer thickness of the coffee powder 9. In the embodiments of Figures 6 and 7, the insert 10 is present. The projecting regions 16 may, however, be left to stand also in the case of the embodiment according to Fig. 1, in which the heatsealing seam is adapted to be torn open or pulled open along the upper edge 7.

Fig. 8 shows a modification of the embodiment according to Fig. 2, with the heatsealing seam on the lateral edges 4, 5 extending vertically in the upper region and heatsealing of the edge 7 may be omitted on account of the insert being folded. For brewing coffee by hand or in coffee machines without filter-cover, this embodiment can be utilized as in the case of the filter pouch as according to Fig. 2.

Fig. 9 depicts a production process for the coffee-filter pouch according to Fig. 1. Two webs 18, 19 are unwound from supply reels 20, 21 and move upwards over two first heatsealing cylinders 22 and through the cylinder gap formed thereby. The first heatsealing cylinders 22 form the heatsealing seams for the bottom edge 6 and the two lateral (side) edges 4, 5. At the same time, the metered quantity of coffee powder 9 is added through a filling funnel 23 to the cylinder gap. Addition of the coffee powder 9 is coupled with respect to time with the angle of rotation of the heatsealing cylinders 22 so that the coffee powder 9 is added at a point in time immediately subsequently to production of the heatsealing seam of the bottom edge 6.

There are contained small rectangular cut-outs 50 in the filter material web which serve to form the grip lips 8a. The controls of the various heatsealing cylinders and of the cutting or die-cutting cylinders takes place in a manner such that the cut-outs 50 come to lie at the upper end of the tabs 8, so that the tab 8 of the other filter material web 19, which does not contain any such cut-outs, is a little longer and in that way forms the grip lip 8a.

The filter material webs 18, 19 then pass through a pair of second heatsealing cylinders 24, which produce the heatsealing seam, which is adapted to be torn or pulled open, along the upper edge 7. It is advisable to separate the heatsealing pairs in 22 and 24 so as to form the upper edge such as to be capable of being readily pulled open through sealing conditions different from edges 4, 5 and 6. Under certain circumstances - e.g. through varying seam widths and seam stampings - it is, however, possible to also form all edges with the pair of heatsealing cylinders 22, with the cylinder pair 24 thus being omitted. The coffee-filter pouch is then finish-sealed and only still needs to be cut out from the webs 18, 19.  That is done by means of cutting or die-cutting cylinders 25.  After passage through the two cutting or die-cutting cylinders 25, the coffee-filter pouch 1 drops onto a chute or a conveyor belt 26, which conducts it to possible further packaging stations.  The remainder of webs 18, 19 can be wound onto a waste material cylinder 27.

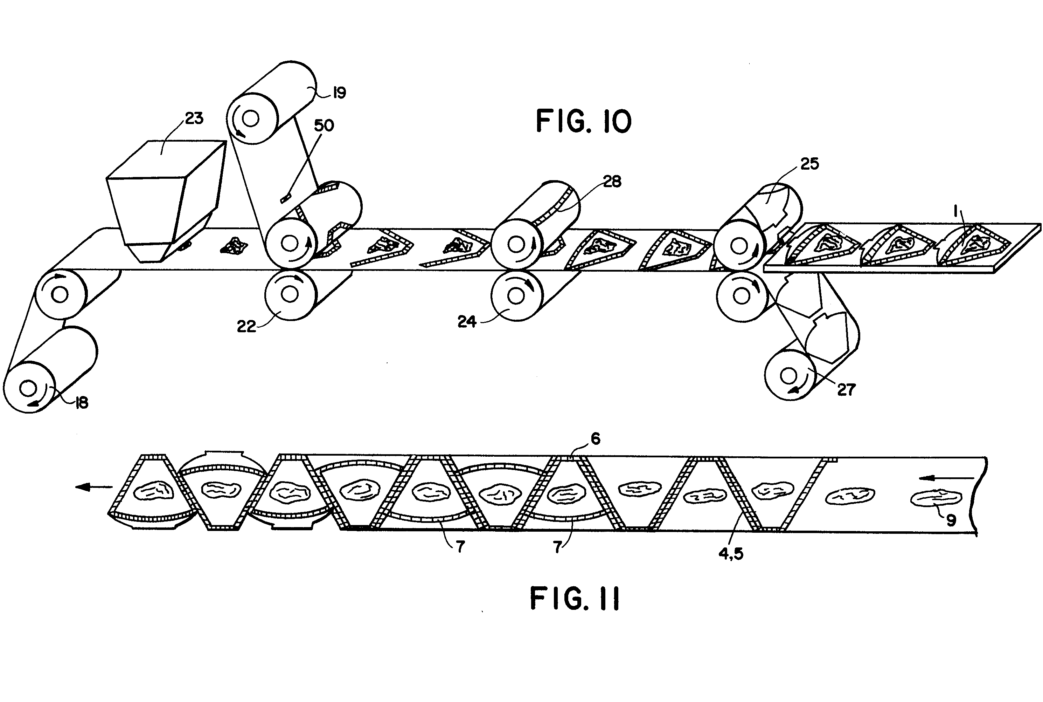

The process shown diagramatically in Fig. 10 is similar to that of Fig. 9, but the various pairs of cylinders are not positioned vertically above one another but, rather, are positioned in a horizontal plane.  The bottom web 18 is supplied horizontally, and the already metered portions (servings) of coffee powder are applied thereto before the upper web is supplied from the top into the cylinder gap of the first heatsealing cylinders 22.

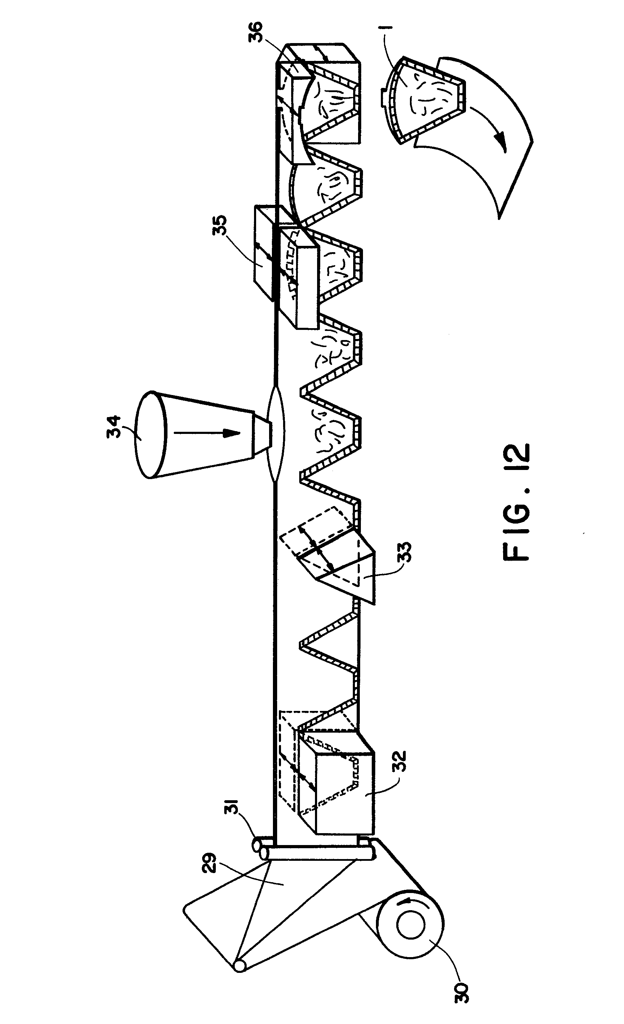

In the process according to Figures 9 and 10, the heatsealing regions 28 of the heatsealing cylinders are arranged in a manner such that the heatsealing seams point with the bottom edge 6 in the direction of conveyance of the webs 18, 19.  Fig. 11 shows a top view (bird's eye view) onto a material-saving arrangement of the heatsealing seams on the webs 18, 19.  The lateral edges 4, 5 of successive coffee-filter pouches are in that respect contacting one another, and the bottom edges 6 point alternatingly to the one and to the other side.

While two material webs 18, 19 are being supplied in the processes according to Figures 9, 10 and 11, only a single web 30 is being supplied in the schematic diagram of the process shown in Fig. 12, which web is being folded along the center line by means of a fold-forming wedge 29.  The folded web 30 then extends through between two guide cylinders 31, with the fold being located at the bottom and the two web edges at the top.  The heatsealing seams at the bottom edge 6 and at the lateral edges 4 and 5 of the coffee-filter pouch are produced through heatsealing jaws 32 movable transversely in relation to the web. Due to the fold-formation, heatsealing of the bottom edge 6 may also be omitted in the case of this production process.  The portions of the web beneath the lateral edges 4, 5 are then cut out through conical cutting jaws 33 which are likewise movable transversely to the web 30.  Subsequently thereto, the metered quantity of the coffee powder 9 is filled in through a filling chute 34, whose outflow opening is located between the two upper edges of web 30.  Further heatsealing jaw 35 then join the two upper edges of web 30 to produce the heatsealing seam along the upper edge 7 of the filter pouch, and finally the portions of the web 30 projecting beyond the grip tabs 8 are severed through further cutting jaws 36.  The individual coffee-filter pouches 1 then drop onto a chute 26 and are optionally packaged individually or in groups.

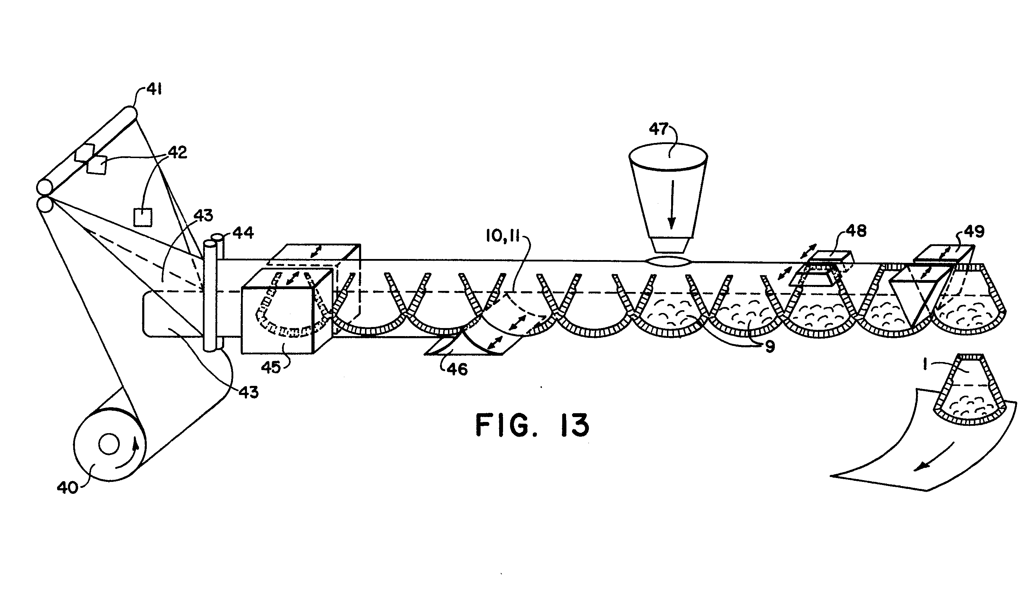

Fig. 13 schematically shows the course of a process for producing a coffee-filter pouch 1 according to Fig. 2 with the insert 10.  A single web 40 moves from a supply reel through between a pair of cutting cylinders 41, with rhombic cut-outs 42 being produced along the center line of the web, the significance of which results from the further course of the process.  A wedge-shaped folding means 43 serves to then fold the web 40 in W-configuration, and said web then moves through supply cylinders 44.  The sealing seam along the upper edge 7 and of the lateral edges 4, 5, which largely follow it, of the filter pouch are produced through a first pair of laterally movable sealing jaws 45.  In the course of production, the filter pouch is positioned upside down in that connection, i.e., the upper edge 7 is disposed at the bottom end of the folded web 40. The distance (d) of the tips pointing toward one another of two successive rhombic cutouts 42 correspond to the width of the insert 10 along line 11 in Fig. 2. The rhombic cut-outs 42 serve to make sure that the inserts 10 are heatsealed only along the inner regions 14 of Fig. 2 to the layers 2, 3, while the layers 2 and 3 are heatsealed together along the outer regions 15. The portions of the folded web 40 which project beyond the upper edge 7 are cut out through first cutting jaws 46. The semi-finished filter pouches are filled from their botton side through a filling chute 47, whose outflow opening dips in between the upper edges of the folded web 40. After that has been done, the bottom side is closed through production of the heatsealing seam forming the bottom edge 6. This takes place by means of second sealing jaws 48. Through second cutting jaws 49 the portions of the folded web 40 which are left between the lateral edges 4 and 5 of two successive filter pouches are then cut out. The finished filter pouch then is stacked, further packaged or the like.

The sequence of some of the process steps shown in Figures 12 and 13 may optionally be changed. For example, the filling chute 34 or, resp., 47 may be located in front of the first cutting jaws 33 or, resp. 46. Cutting out of the filter pouch may also take place in a single process step through a single pair of cutting jaws if sufficiently wide and secure sealing edges on the finished filter pouch can be ensured thereby.

Water-permeable filter paper capable of being heat sealed and fed in roller form as continuous web material serves as the filter material 2, 3.  Said filter paper consists on the outer side of about 15-25 grams per square meter of purest cellulose-/ Manila fibers as nonwoven fiber batt, said fibers being neutral in taste, which are lined on the inner side with about 3-6 grams per square meter of thermoplastic polyolefin fibers stable over against boiling water so as to attain heatsealability.  Other materials, such as pure synthetic fiber batts or needle-perforated synthetic material films optionally coated to render them heatsealable may also be used.  Depending upon material thickness, type of material and production speed, etc., the sealing temperatures amount to about 120-190°C.  Dependent upon the required production performance and conditioned by which of the described production processes (Fig. 9-13) is employed, the filter pouches can be produced at performances of, typically, 30-90 pouches per minute in intermittent mode of operation according to Fig. 12 and 13, or in rotating mode of operation according to Fig. 9-11. For higher performances the rotating processes according to Fig. 9-11 may also be made to involve a plurality of webs, with the performance thus being multiplied accordingly.  Depending upon type of design, processes according to Fig. 12 and 13 in rotating mode of procedure also allow for a production rate increased by several times.  The processes according to Fig. 9-11, finally, can also be laid out to run off intermittently, in which regard it is worked, in lieu of with sealing cylinders, with sealing jaws similarly to Fig. 12 and 13.  A typical filter pouch size according to Fig. 2 for a 4-cup serving contains about 25 grams of coffee powder 9. The height dimensions are about 130 millimeters at an angle of closing of about 77°, and at a lower

- 16 -

sealing edge length of 6 of about 50 millimeters there results an upper width of about 200 millimeters as length of section. In that respect the radius of the closing, upper circular arc 7 is about 160 millimeters, the edges 4, 5 have a length of about 120 millimeters. The sealing edges are 3-8 millimeters wide, with greater sealing edge widths being employed in particular in the region of welding of the insert 10 to the edges 4, 5 in the region 14, 15. The minimum depth of the insert 10 is 67 millimeters, but it preferably has a depth of 75-95 millimeters so as to create a sufficiently large space for pouring in the water, which suffices for manual preparation rate of about 60 pouches per minute according to the process of Fig. 13, the sealing temperatures amount to about 160°C. In the production of the pull-open-type filter pouches according to Fig. 1 by the processes of Fig. 9-11 and at a production rate of about 40-50 pouches per minutes, the sealing temperatures in the cylinder pair 22 are about 170°C, and in the cylinder pair 24 they are about 150°C. The respective sealing pressures are to be adjusted empirically, as they customarily cannot be continually measured and re-adjusted without special effort on such production machines.

All of the measurements mentioned in the Example for other filter pouch sizes, e.g. for 2, 6, 8 and 10 cups, are completely different, except for the closing angle and the edge length 6. The closing angle and edge length 6 may also vary, depending upon the conicalness (taper) of the filter holding system. Though the description of the Figures only relates to coffee-filter pouches, it in the same way also applies, however, for tea-filter pouches.

CLAIMS

1. Coffee or tea filter pouch for making filter coffee or, resp., tea, comprising two layers of a water-permeable filter material, which are joined at the edges so as to form a package containing coffee grounds or, resp., tea leaves, with the spacing of the lateral edges decreasing conically downwardly so that the filter pouch tapers downwardly, characterized in that the filter material is unilaterally heat-sealable and in that the two layers (2, 3) of the filter material are joined through a heat sealing seam at least along the lateral edges (4, 5).

2. A filter pouch as according to claim 1 characterized in that the filter pouch (1) lying flat, has a shape similar to a circular sector with cut-off tip or is configured to be trapezoidal with a larger upper edge of the shape of the sector of a circle.

3. A filter pouch as according to claim 2, characterized in that the heatsealing seam along the region of the upper edge (7) is adapted to be pulled or torn open and in that the upper edge (7) of the heatsealing seam is located on the circle circumference section or, spaced anywhere therebelow, joins the upper terminal points of the edges (4, 5).

4. A filter pouch as according to claim 1, characterized in that the two layers (2, 3) at the upper edge (7) are not joined together, that the filter pouch (1) includes a gusset (insert) (10) of a folded layer of said unilaterally heatsealable filter material, which is inserted into the upper region of said filter pouch (1) with the folded edge pointing downward and with the heatsealable side directed outwardly and in that the gusset (10) is heatsealed with the two layers (2, 3) of said filter material at the upper edge (7) and in the region of the side edges (4, 5), and is narrower than the two layers (2, 3) by an amount such that the two layers (2, 3) are projecting laterally by respectively about half the width of the heatsealing seam and in that they are heatsealed with the gusset as well as with one another.

5. A process of producing a coffee or tea filter pouch as according to one of claims 1 to 3, characterized:

in that two webs (18, 19) of the filter material are joined;

in that a metered volume of coffee powder (9) is added at spacing in between the webs (18, 19) at or before the point at which the webs are joined (moved together);

and in that said two webs (18, 19) are heatsealed (22) at the edges (4, 5, 6) in conformity with the shape of the filter pouch (1) round about the locations at which the coffee powder or, resp., the tea leaves are added and

in that the upper pouch edge (7) adapted to be pulled open is contour heatsealed in a separate sealing station (24), in that the filter pouch (1) is then cut out or die-cut (25) from the webs (18, 19) round about the heatsealing seams.

6. A process of producing a coffee or tea filter pouch as according to one of claims 1 to 3, characterized:

in that a single web (30) of said heatsealable filter material is supplied and folded in longitudinal direction at the center;

in that the heatsealing seams for the lower edge (6) and the lateral edges (4, 5) are produced;

in that die-cutting or cutting out of the conical side portions (16) takes place;

in that a metered volume of coffee powder (9) or, resp., tea leaves is filled in between the upper edges of the web (30) and

in that the heatsealing seam for the upper edge (7) of the filter pouch is produced, followed by the circular-segment-shaped die-cutting of the upper filter pouch edge (7), with the filter pouch also being separated thereby from the web.

7.	A process of producing a coffee or tea filter pouch as according to claim 4, characterized:

in that rhombic cut-outs (42) are produced in the supplied web (40) along the center line, the spacing of which cut-outs is equal to the bottom width of the gusset (10);

in that the web (40) is foled in W-shaped manner, whereby gusset (10) is formed;

in that the heatsealing seams for the upper edge (7) and at least a part of the lateral edges (4, 5) of the filter pouch (1) are produced, with the filter pouch (1) pointing during production downwardly with the upper edge (7);

in that the circular-segment-shaped cutting out of the upper edge (7) takes place;

in that a metered volume of the coffee powder (9) or, resp., of the tea leaves is filled-in through the still open bottom edge (6);

in that the heatsealing seams for the bottom edge (6) and the remaining part of the lateral edges (4, 5) of the filter pouch are produced and

- 20 -

in that the filter pouch (1) is, by cutting away the conical side parts, cut or die-cut out of the web (40).

0186867

FIG. 1

FIG. 5

FIG. 6

FIG. 7

FIG. 8

0186867

FIG.4

FIG. 2

FIG. 3

FIG. 9

0186867

FIG.10

FIG.11

FIG. 12

FIG. 13